# EUROPEAN PATENT APPLICATION

(11) **EP 4 670 970 A1**
(43) Date of publication of application: **31.12.2025**
(21) Application number: 23924039.3
(22) Date of filing: 22.02.2023
(51) Int. Cl.: B32B 27/00, B65D 30/02, B65D 65/40, C09J 175/06, C09J 7/30

(54) **MULTILAYER FILM USING SOLVENTLESS ADHESIVE, METHOD FOR PRODUCING SAME, AND PACKAGING CONTAINER**

(71) Applicant: Toyo Seikan Co., Ltd., Tokyo 141-8640 (JP)
(72) Inventor: GOTOU, Osamu, Yokohama-shi, Kanagawa 230-0001 (JP); SAEKI, Mayumi, Yokohama-shi, Kanagawa 230-0001 (JP); HARA, Takuya, Yokohama-shi, Kanagawa 230-0001 (JP); ITOU, Yusuke, Yokohama-shi, Kanagawa 230-0001 (JP)
(74) Representative: dompatent
(86) International application number: PCT/JP2023/006457
(87) International publication number: WO 2024/176385

(57) **Abstract**

Provided are a multilayer film capable of suppressing generation of air bubbles in an adhesive layer and suppressing occurrence of winding misalignment when wound immediately after lamination, a method for producing the multilayer film, and a packaging container using the multilayer film. The multilayer film of the present invention is a multilayer film including a plurality of resin films and one or more adhesive layers, and is characterized that at least one of the adhesive layers is formed of a solventless adhesive; and the solventless adhesive contains a main agent made of a polyester-based resin and a curing agent made of an aliphatic isocyanate, and a viscosity of the solventless adhesive at 80°C is from 650 to 1600 mPa·s.

## Description

### Technical Field

The present invention relates to a multilayer film using a solventless adhesive, a method for producing the multilayer film, and a packaging container formed by the multilayer film.

### Background Art

Pouch packaging containers used for food packaging, medical product packaging, cosmetic packaging, and the like, and flexible packaging containers used for cup lids are typically constituted by multilayer films in which resin films and metal foils are laminated. For example, a packaging container such as a pouch packaging bag or a laminate tube constituted by a multilayer film has been typically used.

In such packaging containers, for example, when resin films having different characteristics, such as a combination of a nylon film and a polyethylene film, are laminated, an adhesive is generally used due to poor adhesion between the films.

For such an adhesive, it is desired to use a solventless adhesive from the viewpoint of reducing a global environmental load. For a multilayer film using a solventless adhesive, a multilayer film having an adhesive layer made of a solventless adhesive which is composed of a main agent made of polyester polyol and a curing agent made of an aliphatic diisocyanate compound and an alicyclic diisocyanate and having a viscosity at 70°C of from 300 to 900 mPa·s is known (see Patent Document 1).

### Citation List

### Patent Literatures

Patent Document 1: JP 5397584 B

### Summary of Invention

### Technical Problem

However, in a multilayer film using a solventless adhesive, large air bubbles are likely to be generated in its adhesive layer, which causes an appearance defect. In addition, in a production process of a multilayer film, when the multilayer film is wound immediately after lamination, winding misalignment is likely to occur. These phenomena are especially likely in a multilayer film having a large number of layers or a multilayer film having a vapor deposition layer.

The reason why such phenomena occur is presumed to be that a slight positional misalignment occurs between the resin films during a period from when the resin films are laminated by interposing the adhesive layer to when curing of the solventless adhesive constituting the adhesive layer is completed.

The present invention has been made in view of the above-described circumstances, and an object thereof includes providing a multilayer film capable of suppressing generation of air bubbles in an adhesive layer and suppressing occurrence of winding misalignment when wound immediately after lamination, a method for producing the multilayer film, and a packaging container using the multilayer film.

### Solution to Problem

The multilayer film of the present invention is a multilayer film characterized by including a plurality of resin films and one or more adhesive layers,
at least one of the adhesive layers is formed of a solventless adhesive,
wherein the solventless adhesive contains a main agent made of a polyester-based resin and a curing agent made of an aliphatic isocyanate, and a viscosity of the solventless adhesive at 80°C is from 600 to 1400 mPa·s.

In the multilayer film of the present invention, a viscosity of the main agent at 80°C is preferably from 2000 to 4500 mPa·s.

The curing agent is preferably made of 1,6-hexamethylene diisocyanate (HDI).

The solventless adhesive preferably contains the curing agent in an amount ranging from 50 to 200 parts by mass with respect to 100 parts by mass of the main agent.

In the multilayer film of the present invention, it is preferable that:
at least one of the resin films includes a vapor deposition layer, and
the adhesive layer formed of a solventless adhesive is formed between the vapor deposition layer and an adjacent resin film.

The method for producing a multilayer film according to the present invention is a method for producing a multilayer film characterized by including laminating one resin film and another resin film while joining the resin films with an adhesive-applied layer made of a solventless adhesive interposing,
wherein the solventless adhesive contains a main agent made of a polyester-based resin and a curing agent made of an aliphatic isocyanate, and a viscosity of the solventless adhesive at 80°C is from 600 to 1400 mPa·s.

In the method for producing a multilayer film of the present invention, an amount of the solventless adhesive applied to the adhesive-applied layer is from 0.5 to 3.0 g/m².

The one resin film preferably includes a vapor deposition layer on a surface that is to be in contact with the adhesive-applied layer.

Further, a packaging container of the present invention is characterized by being formed of the multilayer film described above.

### Advantageous Effects of Invention

According to the present invention, the viscosity of the solventless adhesive forming the adhesive layer is from 600 to 1400 mPa·s at 80°C, generation of air bubbles in the adhesive layer can be suppressed, and occurrence of winding misalignment can be suppressed when the multilayer film is wound immediately after lamination.

### Brief Description of Drawings

FIG. 1 is an explanatory cross-sectional view illustrating a structure of an example of a multilayer film of the present invention.
FIG. 2 is an explanatory view illustrating a structure of an example of a laminator for producing a multilayer film of the present invention.

### Description of Embodiments

Embodiments of the present invention will be described in detail below.

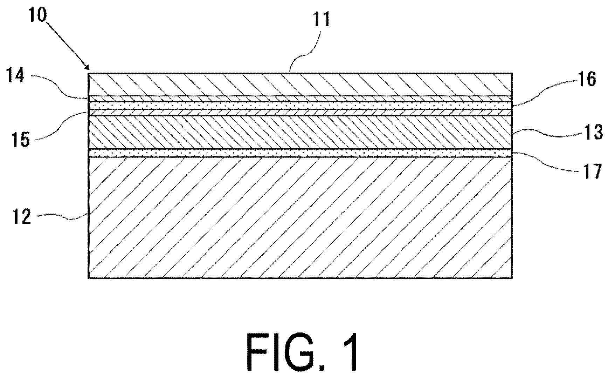

FIG. 1 is an explanatory cross-sectional view illustrating a structure of an example of a multilayer film of the present invention.

The multilayer film 10 has an outer layer resin film 11, an inner layer resin film 12, and an intermediate layer resin film 13 provided between the inner layer resin film 12 and the outer layer resin film 11. An ink layer 14 is formed on an inner surface of the outer layer resin film 11 (surface on a side of the intermediate layer resin film 13). A vapor deposition layer 15 is formed on a surface, on a side of the outer layer resin film 11, of the intermediate layer resin film 13. Between the ink layer 14 and the vapor deposition layer 15, there is formed an adhesive layer 16 made of a solventless adhesive. Between the inner layer resin film 12 and the intermediate layer resin film 13, there is formed an adhesive layer 17 made of a solventless adhesive.

The outer layer resin film 11 is preferably a film excellent in thermal dimensional stability. The use of such an outer layer resin film 11 facilitates formation of the ink layer since a baking treatment can be performed at a temperature of about 80°C after the outer layer resin film 11 is subjected to, for example, gravure printing. In addition, a biaxially stretched film is preferably used as the outer layer resin film 11, in terms of obtaining high tensile strength.

As a material constituting the outer layer resin film 11, a polyamide-based resin or a polyester-based resin is preferably used.

Furthermore, examples of usable polyamide-based resins include nylon 6, nylon 8, nylon 6,6, a nylon 6/6,6 copolymer, nylon 6,10, meta-xylylene adipamide (MXD6), nylon 11, and nylon 12.

Examples of usable polyester-based resins include polyethylene terephthalate (PET) and polybutylene terephthalate (PBT). Copolyesters containing other polyester units may also be used as long as the properties of these resins are not impaired. Among copolymerization components for forming such a copolyester, isophthalic acid, p-β-oxyethoxybenzoic acid, naphthalene 2,6-dicarboxylic acid, diphenoxyethane-4,4'-dicarboxylic acid, 5-sodium sulfoisophthalic acid, adipic acid, sebacic acid or an alkyl ester derivative thereof, or the like can be used as a dicarboxylic acid component. As a glycol component, propylene glycol, 1,4-butanediol, neopentyl glycol, 1,6-hexylene glycol, cyclohexanedimethanol, an ethylene oxide adduct of bisphenol A, diethylene glycol, triethylene glycol, or the like can be used. These compounds can be used alone, or two or more thereof can be used in combination.

A thickness of the outer layer resin film 11 is appropriately selected depending on the type of the resin constituting the outer layer resin film 11, the application of the multilayer film, and the like. For example, when the outer layer resin film 11 is made of nylon, the thickness is preferably from 10 to 30 µm, and, when the outer layer resin film 11 is made of polyethylene terephthalate (PET), the thickness is preferably from 6 to 28 µm.

A surface of the outer layer resin film 11 in contact with the adjacent layer is preferably subjected to a surface modification treatment such as a corona treatment in order to improve adhesion to the adjacent layer.

As a material constituting the inner layer resin film 12, a resin excellent in heat sealability is preferably used in order to form a pouch packaging bag or a heat seal lid. Examples of such a resin include polyolefin-based resins such as polyethylene (PE) and polypropylene (PP).

A thickness of the inner layer resin film 12 is not particularly limited. For example, when the inner layer resin film 12 is made of polyethylene, the thickness is preferably from 50 to 200 µm, and, when the inner layer resin film 12 is made of polypropylene, the thickness is preferably from 30 to 150 µm.

As the inner layer resin film 12, a non-stretched film is preferably used.

As a material constituting the intermediate layer resin film 13, a resin having gas barrier properties can be used, and specific examples thereof include nylon resins such as aliphatic nylons including nylon 6, nylon 8, nylon 11, nylon 12, nylon 6,6, nylon 6,10, nylon 10,6, and a nylon 6/6,6 copolymer, and partially aromatic nylons such as polymetaxylylene adipamide, and polyglycolic acid resins.

Examples of usable materials constituting the intermediate layer resin film 13 include olefin-based resins such as polyethylene (PE) including low-density polyethylene (LDPE), medium-density polyethylene (MDPE), high-density polyethylene (HDPE), linear low-density polyethylene (LLDPE) and linear very-low-density polyethylene (LVLDPE), polypropylene (PP), ethylene-propylene copolymer, polybutene-1, ethylene-butene-1 copolymer, propylene-butene-1 copolymer, ethylene-propylene-butene-1 copolymer, ethylene-vinyl acetate copolymer (EVA), ion-crosslinked olefin copolymer (ionomers), and mixtures thereof.

A thickness of the intermediate layer resin film 13 is not particularly limited, but is preferably in a range of from 5 to 100 µm.

The ink layer 14 is formed by, for example, gravure printing on the inner surface of the outer layer resin film 11.

A thickness of the ink layer 14 is preferably from 1 to 8 µm.

As a material constituting the vapor deposition layer 15, a metal material such as aluminum, a non-metal inorganic material such as silica, or the like can be used.

The adhesive layers 16 and 17 are formed of a solventless adhesive. The solventless adhesive is a two-part reaction curable adhesive composed of a main agent and a curing agent.

Thicknesses of the adhesive layers 16 and 17 are preferably from 0.5 to 3 µm.

As the main agent constituting the solventless adhesive, it is preferable to use a polyester-based resin having good adhesion to the inner layer resin film 12, the intermediate layer film 13, the ink layer 14, and the vapor deposition layer 15 and excellent lamination strength and impact resistance, and a polyester polyol resin is particularly preferable.

The polyester polyol resin may be produced by an esterification reaction between a polybasic acid such as succinic acid, adipic acid, azelaic acid, sebacic acid, phthalic acid, isophthalic acid, or terephthalic acid and a polyhydric alcohol such as ethylene glycol, 1,2-propanediol, 1,3-butanediol, 1,4-butanediol, 3-methyl-1,5-pentanediol, 1,6-hexanediol, 1,4-cyclohexanedimethanol, neopentyl glycol, 3,3-bis(hydroxymethyl)heptane, diethylene glycol, dipropylene glycol, glycerin, or trimethylolpropane.

Specific examples of the polyester polyol resin include (1) adipate-based polyester glycols such as poly(ethylene adipate), poly(diethylene adipate), poly(propylene adipate), poly(tetramethylene adipate), poly(hexamethylene adipate), and poly(neopentylene adipate), (2) polycaprolactone-based polyester glycols such as poly-ε-caprolactone, and (3) other polyester polyol resins such as poly(hexamethylene sebacate) and poly(hexamethylene carbonate).

Further, in addition to the polyester-based resin, for example, a polyurethane-based compound may be contained as the main agent. The use of such a main agent can ensure adhesion to the ink layer 14 because the ink layer 14 provided on the inner surface of the outer layer resin film 11 usually contains a urethane component.

A number-average molecular weight of the resin constituting the main agent is preferably from 700 to 1700, and more preferably from 800 to 1600. When the number-average molecular weight of the resin included in the main agent is less than 700, the viscosity of the solventless adhesive decreases, and as a result, suitability for continuous lamination may deteriorate when producing the multilayer film. Since the number of terminal reactive groups increases, it is necessary to increase the amount of the curing agent, and as a result, there is a problem in that the hardness of the obtained adhesive layers 16 and 17 increases due to an increased amount of crosslinking and the impact resistance of the adhesive layers 16 and 17 may deteriorate. On the other hand, when the number-average molecular weight of the resin included in the main agent is more than 1700, the impact resistance of the obtained adhesive layers 16 and 17 is improved; however, since the viscosity of the solventless adhesive increases, a wetting failure may occur during coating the solventless adhesive, thereby causing an appearance defect or reduction in lamination strength of the obtained multilayer film 10.

The viscosity of the main agent at 80°C is preferably from 2000 to 4500 mPa·s, and more preferably from 2500 to 4000 mPa·s.When the viscosity is less than 2000 mPa·s, transfer unevenness of the roll occurs, the film formation of the adhesive layers 16 and 17 becomes unstable, and an appearance defect or extreme reduction in lamination strength of the obtained multilayer film 10 may occur. On the other hand, when the viscosity is more than 4000 mPa·s, a wetting failure is likely to occur during coating the solventless adhesive, and an appearance defect or reduction in lamination strength of the obtained multilayer film 10 may occur.

As the curing agent constituting the solventless adhesive, it is preferable to use an isocyanate compound, particularly only an aliphatic isocyanate.

As the aliphatic isocyanate constituting the curing agent, butane-1,4-diisocyanate, 1,6-hexamethylene diisocyanate (HDI), isopropylene diisocyanate, methylene diisocyanate, 2,2,4-trimethylhexamethylene diisocyanate, m-tetramethylxylylene diisocyanate, lysine diisocyanate, dimer diisocyanate obtained by converting a carboxyl group of dimer acid into an isocyanate group, and the like can be used alone or in combination of two or more thereof. Among them, 1,6-hexamethylene diisocyanate (HDI) is preferable.

The viscosity of the curing agent constituting the solventless adhesive is preferably from 50 to 250 mPa·s, and more preferably from 50 to 150 mPa·s at 80°C. When the viscosity is less than 50 mPa·s, since the viscosity of the curing agent is low, the obtained adhesive layers 16 and 17 become soft, and as a result, the lamination strength may become low. On the other hand, when the viscosity is more than 250 mPa·s, since the viscosity of the curing agent is high, the obtained adhesive layers 16 and 17 become hard, and as a result, the impact resistance may become low.

In the solventless adhesive, with respect to 100 parts by mass of the main agent, the curing agent is preferably contained in a range of from 50 to 200 parts by mass, and is particularly preferably in a range of from 50 to 100 parts by mass. When the ratio of the curing agent is too small, since the obtained adhesive layers 16 and 17 are insufficiently crosslinked, the lamination strength of the obtained multilayer film 10 may deteriorate. On the other hand, when the ratio of the curing agent is too large, the main agent and the curing agent are not sufficiently mixed, and thus the obtained adhesive layers 16 and 17 include a mixture of an insufficiently crosslinked portion and an excessively crosslinked portion. As a result, the lamination strength and the impact resistance of the obtained multilayer film 10 may deteriorate.

In the present invention, the viscosity of the solventless adhesive is from 600 to 1400 mPa·s, and more preferably from 800 to 1200 mPa·s at 80°C. When the viscosity of the solventless adhesive is less than 600 mPa·s, transfer between rolls may become poor during coating of the solventless adhesive, which results in "transfer unevenness". In addition, since the solventless adhesive is not uniformly coated and is partially reduced, the lamination strength and impact resistance may be reduced. On the other hand, when the viscosity of the solventless adhesive is more than 1400 mPa·s, a "wetting failure" may occur during coating the solventless adhesive, and the resulting adhesive layers 16 and 17 may become partially thin. The presence of thin portions in the adhesive layers 16 and 17 may cause reductions in lamination strength and impact resistance.

The solventless adhesive may contain a polyurethane-based compound in addition to the main agent and the curing agent. The blending of the polyurethane-based compound can ensure adhesion to the ink layer 14 because the ink layer 14 provided on the inner surface of the outer layer resin film 11 usually contains a urethane component.

The solventless adhesive may further contain various additive agents such as a filler, a softener, an antioxidant, a stabilizer, an adhesion promoter, a leveling agent, an anti-foaming agent, a plasticizer, an inorganic filler, a tackifying resin, a fiber, a colorant such as a pigment, or a lifetime extender.

Furthermore, the solventless adhesive may contain an adhesion promoter. As the adhesion promoter, a coupling agent such as a silane coupling agent, a titanate-based coupling agent, or an aluminum-based coupling agent, an epoxy resin, or the like can be used.

Specific examples of the silane coupling agent include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane, epoxysilanes such as β-(3,4-epoxycyclohexyl)ethyltrimethoxysilane, γ-glycidoxypropyltrimethoxysilane, and γ-glycidoxypropyltriethoxysilane, vinylsilanes such as vinyltris(β-methoxyethoxy)silane, vinyltriethoxysilane, vinyltrimethoxysilane, and γ-methacryloxypropyltrimethoxysilane, hexamethyldisilazane, and γ-mercaptopropyltrimethoxysilane.

Specific examples of the titanate-based coupling agent include tetraisopropoxytitanium, tetra-n-butoxytitanium, butyl titanate dimer, tetrastearyltitanate, titanium acetylacetonate, titanium lactate, tetraoctylene glycol titanate, and tetrastearoxytitanium.

Specific examples of the aluminum-based coupling agent include acetoalkoxyaluminum diisopropylate.

Specific examples of the epoxy resin include various commercially available epoxy resins such as epibis-type, novolac-type, β-methyl epichlorohydrin-type, cyclic oxirane-type, glycidyl ether-type, glycidyl ester-type, polyglycol ether-type, glycol ether-type, epoxidized fatty ester-type, polyvalent carboxylic ester-type, aminoglycidyl-type, and resorcinol-type epoxy resins.

The multilayer film 10 described above is produced, for example, in the following manner.

First, the ink layer 14 is formed by performing, for example, a gravure printing treatment on one surface of the outer layer resin film 11. The vapor deposition layer 15 is formed by performing a vapor deposition treatment on one surface of the intermediate layer resin film 13.

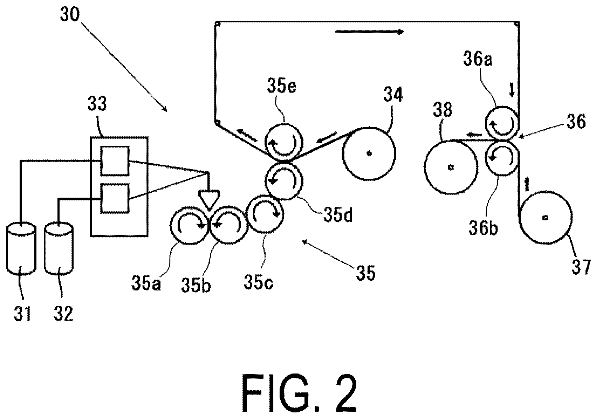

Subsequently, the outer layer resin film 11 on which the ink layer 14 is formed and the intermediate layer resin film 13 on which the vapor deposition layer 15 is formed are laminated by a laminator as illustrated in FIG. 2.

More specifically, in FIG. 2, reference numeral 30 denotes a laminator, 31 denotes a main agent tank containing the main agent, 32 denotes a curing agent tank containing the curing agent, 33 denotes an adhesive supply unit that supplies the main agent and the curing agent, and 34 denotes an unwinding roll that supplies the outer layer resin film 11. Reference numeral 35 denotes an adhesive application unit that mixes the main agent and the curing agent to prepare a solventless adhesive and applies the prepared solventless adhesive. A plurality of (five in the illustrated example) rolls 35a, 35b, 35c, 35d, and 35e are provided in the adhesive application unit 35. Reference numeral 36 denotes a laminating unit that laminates the outer layer resin film 11 and the intermediate layer resin film 13, and includes a pair of pressure rolls 36a and 36b. Reference numeral 37 denotes an unwinding roll that supplies the intermediate layer resin film 13, and reference numeral 38 denotes a winding roll that winds an intermediate laminated film which will be described later.

In the laminator 30, the outer layer resin film 11 on which the ink layer 14 is formed is supplied from the unwinding roll 34 to the adhesive application unit 35 at a predetermined speed. On the other hand, the main agent and the curing agent are heated to a predetermined temperature in the main agent tank 31 and the curing agent tank 32 and melted. The heated and melted main agent and curing agent are supplied in predetermined amounts from the adhesive supply unit 33 to the adhesive application unit 35. The main agent and the curing agent are mixed in the adhesive application unit 35 to prepare a solventless adhesive. In the adhesive application unit 35, the solventless adhesive is applied to a surface of the ink layer 14 formed on the outer layer resin film 11 to form an adhesive-applied layer.

Next, the outer layer resin film 11 is sent to the laminating unit 36. On the other hand, the intermediate layer resin film 13 on which the vapor deposition layer 15 is formed is supplied from the unwinding roll 37 to the laminating unit 36. In the laminating unit 36, the outer layer resin film 11 and the intermediate layer resin film 13 are laminated under pressure while the resin films are superposed on each other so that the vapor deposition layer 15 is in contact with the adhesive-applied layer formed on the ink layer 14, thereby obtaining an intermediate laminated film in which the outer layer resin film 11, the ink layer 14, the adhesive layer 16, the vapor deposition layer 15, and the intermediate layer resin film 13 are laminated. The intermediate laminated film is wound by the winding roll 38.

The multilayer film 10 is obtained by the same process except that the outer layer resin film 11 on which the ink layer 14 is formed is replaced with the intermediate laminated film, and that the intermediate layer resin film 13 on which the vapor deposition layer 15 is replaced with the inner layer resin film 12 in the above-described step, and thus the inner layer resin film 12 is laminated on the other surface of the intermediate layer resin film 13 with the adhesive layer 17 interposing therebetween. The obtained multilayer film 10 is subjected to an aging treatment to promote the effect of the adhesive layers 16 and 17.

In the above-described process, a heating temperature of the main agent and the curing agent is, for example, from 40 to 80°C.

A supplying speed of each of the resin films, that is, an application speed of the solventless adhesive is preferably from 100 to 200 m/min.

A temperature of the solventless adhesive during application is preferably from 40 to 80°C.

An amount of the solventless adhesive applied is preferably from 0.5 to 3.0 g/m², and more preferably from 1.2 to 2.1 g/m².

A temperature of the pressure rolls 36a and 36b in the laminating unit 36 is, for example, from 30 to 80°C.

A temperature of the aging treatment of the multilayer film 10 is, for example, from 30 to 70°C, and a treatment time is, for example, from 48 to 96 hours.

According to the multilayer film 10, the viscosity of the solventless adhesive forming the adhesive layers 16 and 17 is from 650 to 1600 mPa·s at 80°C, generation of air bubbles in the adhesive layers 16 and 17 can be suppressed, and occurrence of winding misalignment can be suppressed when the multilayer film is wound immediately after lamination.

The packaging container of the present invention is constituted by the multilayer film described above, and is suitable as a packaging container such as a refill pouch or a retort pouch containing a liquid such as a detergent, a softener, a bleaching agent, a shampoo, a conditioner, or a beverage.

The embodiments in the present invention have been described above. However, the present invention is not limited to the aforementioned embodiments, and variations thereof are possible.

For example, the layer structure of the multilayer film is not limited to the structure illustrated in FIG. 1, and may consist of two resin films, i.e., an outer layer resin film and an inner layer resin film, or may have a plurality of intermediate layer resin films.

In addition, the ink layer and the vapor deposition layer are provided as necessary and are not essential in the present invention.

### Examples

An example of the present invention will be described below, but the present invention is not limited thereto.

### Example 1 and Comparative Example 1

### Solventless Adhesive

Table 1 indicates the compositions of the solventless adhesives used in Example 1 and Comparative Example 1. In Table 1, the viscosities of the main agent, the curing agent, and the solventless adhesive were measured by a method in accordance with JIS K7117-2 using a B8L type viscosimeter available from TOKIMEC.

### Resin Film

As an outer layer resin film, a biaxially stretched nylon film having a thickness of 15 µm was used.

As an intermediate layer resin film, a biaxially stretched polyethylene terephthalate (PET) film having a thickness of 12 µm and having an aluminum vapor deposition layer formed on one surface thereof was used.

As an inner layer film, a non-stretched linear low-density polyethylene (LLDPE) film having a thickness of 130 µm was used.

### Production of Multilayer Film

A multilayer film was produced in the following manner using a laminator having the structure illustrated in FIG. 2.

The main agent and the curing agent found in the following Table 1 were placed in a main agent tank and a curing agent tank, respectively, and heated to 80°C. The main agent and the curing agent were supplied to an adhesive application unit and mixed so as to attain the mass blending ratio found in the following Table 1 by an adhesive supply unit to prepare a solventless adhesive. Then, in the adhesive application unit, the solventless adhesive was applied at 70°C to one surface of the outer layer resin film supplied from an unwinding roll to form an adhesive-applied layer. The amount of the solventless adhesive applied was 2.5 g/m² and the application speed was 150 m/min. Thereafter, the outer layer resin film on which the adhesive-applied layer was formed was conveyed to a laminating unit. In this laminating unit, the outer layer resin film and the intermediate layer resin film on which the vapor deposition layer was formed and which was supplied from the unwinding roll were laminated under pressure at 60°C to prepare an intermediate laminated film. The lamination speed was 150 m/min.

The obtained intermediate laminated film was wound on a roll, an adhesive-applied layer was formed on the other surface of the intermediate layer resin film in the intermediate laminated film under the same conditions as described above, and the intermediate layer resin film and the inner layer resin film were laminated to produce a multilayer film. The obtained multilayer film was held at 40°C for 4 days to perform an aging treatment.

### Preparation of Packaging Container (Pouch)

A refill pouch having a width of 130 mm, a height of 260 mm and a volume of 540 ml was prepared by cutting out a bottom member having a width of 130 mm and a folding width of 36 mm from the obtained multilayer film; sandwiching the bottom member between two multilayer films whose inner surface layers faced each other in a state where the inner surface layer of the bottom member faced the inner surface layers of the multilayer films; sealing the bottom portion by heat sealing at 200°C; and then heat-sealing the two multilayer films whose inner surface layer sides faced each other at 200°C to seal two sides of the side portions.

### Evaluation

### Appearance Defect:

The multilayer film immediately after lamination was visually observed for the range of 1 m in width and 1 m in length to examine the presence or absence of cissing, and the case where cissing was not observed was evaluated as ○, and the case where cissing was observed was evaluated as ×.

### Suitability for Lamination:

The multilayer film immediately after lamination was visually observed for the range of 1 m in width and 1 m in length to examine the presence or absence of tunneling (floating of the bonded portion), and the case where tunneling was not observed was evaluated as ○, and the case where tunneling was observed was evaluated as ×.

### Winding Misalignment Size:

A scale was used to measure how much the film (raw material) wound up immediately after lamination was displaced from the end of the paper tube set on the winding shaft.

### Impact Resistance:

The prepared pouch was filled with 400 g of tap water cooled to 5°C, and then hermetically sealed by heat sealing to prepare 20 sample pouches. The sample pouch was dropped 10 times from a height of 1.2 m with the bottom portion facing downward, and then dropped 10 times in a horizontal posture. This drop test was performed on the 20 pouches, and the number of broken pouches in the 20 pouches was counted.

The results are found in Table 1 below.

**[Table 1]**

| | | Example 1 | Comparative Example 1 |
|---|---|---|---|
| Main agent | Main agent component | Polyester resin | Polyester resin |
| | Number-average molecular weight | from 1400 to 1600 | from 700 to 900 |
| | Viscosity at 80°C (mPa. s) | 3000 | 280 |
| Curing agent | Curing agent component | HDI | HDI + IPDI |
| | Number-average molecular weight | from 500 to 600 | from 600 to 700 |
| | Viscosity at 80°C (mPa. s) | 120 | 250 |
| Solventless adhesive | Weight blending ratio (main agent/curing agent) | 2/1 | 3/2 |
| | Viscosity (mPa. s/80°C) | 1000 | 350 |
| Appearance defect | | ○ | × |
| Suitability for lamination | | ○ | × |
| Winding misalignment size (mm) | | 0 | from 30 to 80 |
| Impact resistance (number of broken bags/number of tests) | | 0/20 | 0/20 |

| | | | |
|---|---|---|---|
| HDI: 1,6-hexamethylene diisocyanate IPDI: 3-isocyanatomethyl-3,5,5-trimethylcyclohexyl isocyanate | | | |

As is clear from the results indicated in Table 1, it was confirmed that, according to Example 1, since the viscosity of the solventless adhesive was within a specific range at 80°C, a multilayer film was obtained which had a good appearance without generating air bubbles in the adhesive layer, had good suitability for lamination, and was able to suppress the occurrence of winding misalignment when wound immediately after lamination.

On the other hand, in Comparative Example 1, since the viscosity of the solventless adhesive was too low at 80°C, the obtained multilayer film had a poor appearance and insufficient suitability for lamination, and large winding misalignment occurred when the multilayer film was wound immediately after lamination.

### Reference Signs List

10 Multilayer film
11 Outer layer resin film
12 Inner layer resin film
13 Intermediate layer resin film
14 Ink layer
15 Vapor deposition layer
16, 17 Adhesive layer
30 Laminator
31 Main agent tank
32 Curing agent tank
33 Adhesive supply unit
34 Unwinding roll
35 Adhesive application unit
35a, 35b, 35c, 35d, 35e Roll
36 Laminating unit
36a, 36b Pressure roll
37 Unwinding roll
38 Winding roll

## Claims

1. A multilayer film, comprising a plurality of resin films and one or more adhesive layers, at least one of the adhesive layers comprising a solventless adhesive,
wherein the solventless adhesive contains: a main agent comprising a polyester-based resin; and a curing agent comprising an aliphatic isocyanate, and a viscosity of the solventless adhesive at 80°C is from 600 to 1400 mPa·s.

2. The multilayer film according to claim 1, wherein a viscosity of the main agent at 80°C is from 2000 to 4500 mPa·s.

3. The multilayer film according to claim 1 or 2, wherein the curing agent comprises 1,6-hexamethylene diisocyanate (HDI).

4. The multilayer film according to any one of claims 1 to 3, wherein the solventless adhesive contains the curing agent in an amount ranging from 50 to 200 parts by mass with respect to 100 parts by mass of the main agent.

5. The multilayer film according to any one of claims 1 to 4, wherein at least one of the resin films comprises a vapor deposition layer, and the adhesive layer comprising a solvent less adhesive is formed between the vapor deposition layer and an adjacent resin film.

6. A method for producing a multilayer film, the method comprising laminating one resin film and another resin film while joining the resin films with an adhesive-applied layer comprising a solventless adhesive interposing,
wherein the solventless adhesive contains: a main agent comprising a polyester-based resin; and a curing agent comprising an aliphatic isocyanate, and a viscosity of the solventless adhesive at 80°C is from 600 to 1400 mPa·s.

7. The method for producing a multilayer film according to claim 6, wherein an amount of the solventless adhesive applied to the adhesive-applied layer is from 0.5 to 3.0 g/m².

8. The method for producing a multilayer film according to claim 6 or 7, wherein the one resin film comprises a vapor deposition layer on a surface that is to be in contact with the adhesive-applied layer.

9. A packaging container comprising the multilayer film according to any one of claims 1 to 5.
